(19) Europäisches Patentamt
European Patent Office
Office européen des brevets

(11) **EP 4 647 994 A1**

(12) **EUROPEAN PATENT APPLICATION**

(43) Date of publication:
**12.11.2025 Bulletin 2025/46**

(21) Application number: **25197626.2**

(22) Date of filing: **27.11.2018**

(51) International Patent Classification (IPC):
*G06Q 20/38* (2012.01)   *G06Q 20/40* (2012.01)

(52) Cooperative Patent Classification (CPC):
**G06Q 20/3823; G06Q 20/40975**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(62) Document number(s) of the earlier application(s) in
accordance with Art. 76 EPC:
**18208728.8 / 3 660 769**

(71) Applicant: **Mastercard International, Inc.
Purchase, NY 10577 (US)**

(72) Inventors:
• **WARD, Michael
  Somerset, TA4 2JB (GB)**

• **ROBERTS, David Anthony
  Somerset, WA4 5RD (GB)**
• **GARRETT, Duncan
  London, N1 2EJ (GB)**
• **BERIC, John
  London, NW11 8NH (GB)**

(74) Representative: **Keltie LLP
No. 1 London Bridge
London SE1 9BA (GB)**

Remarks:
This application was filed on 22/08/2025 as a
divisional application to the application mentioned
under INID code 62.

(54) **TRUSTED COMMUNICATION IN PERFORMING TRANSACTIONS**

(57)     A method of performing a transaction between a first computing device acting as a payment device and a second computing device acting as a terminal is described. The first computing device establishing a communication channel with the second computing device and initiates the transaction. The second computing device sends a request for processing options for the transaction to the first computing device. The first computing device indicates that it supports enhanced processing of the transaction and establishes that the second computing device also supports enhanced processing of the transaction. The first computing device then provides a secure communication to the second computing device, the secure communication comprising cryptographic material comprising material to establish a symmetric cryptographic method encrypted by a public key of an asymmetric cryptographic method for the second computing device to decrypt using a private key of the asymmetric cryptographic method. The first and second computing devices then perform the transaction using enhanced processing, which comprises using a secure channel using the symmetric cryptographic method to protect privacy of information private to an owner or controller of at least the first computing device. A suitable first computing device and second computing device are also described.

Figure 4

**Description**

Field of Disclosure

The present disclosure relates to trusted communication in performing transactions. In embodiments, it relates to a method of establishing trusted communication between a payment device and a point of interaction, and to a payment device and a point of interaction adapted to support such a method.

Background of Disclosure

Payment cards such as credit cards and debit cards are very widely used for all forms of financial transaction. The use of payment cards has evolved significantly with technological developments over recent years. Originally, transactions were on paper, using an imprint of a transaction card and confirmed by a signature. This approach was largely replaced by use of a magnetic stripe of a transaction card swiped through a magnetic stripe reader on a point of sale (POS) terminal to perform a transaction. Transaction cards developed to contain an integrated circuit ("chip cards" or "smart cards") that communicates with a smart card reader in the POS terminal. Using this approach, a transaction is typically confirmed by a personal identification number (PIN) entered by the card user. Cards of this type typically operate under the EMV specifications for interoperation of chip cards and associated apparatus (such as POS terminals and ATMs). ISO/IEC 7816 provides a standard for operation of cards of this type. EMV specifications are managed by EMVCo for relevant industries, and can be found at https://www.emvco.com/document-search/.

Technology has further developed to provide payment cards which operate contactlessly - under EMV, these are covered under the ISO/IEC 14443 standard. Using such cards, the primary account number (PAN) can be read automatically from the card by a POS terminal using NFC protocols - this approach is generally referred to as "contactless" or "proximity" payment. This is typically enabled by embedding an NFC chip in a card body together with a suitable antenna to allow transmission and receipt of wireless signals - the transmissions may be powered by a magnetic inductive field emitted by a proximity reader in the POS terminal. For an effective transaction to be made; the payment card may need to be brought into close proximity to the proximity reader - EMVCo has defined this range under the Level 1 operating volume range of 0-4cm.

A potential problem with any sensitive communication is the risk of eavesdropping during data exchange between parties. This is potentially a concern for any transaction type, though requires particular attention for wireless transactions such as contactless transactions. The concern in the case of such eavesdropping is that an eavesdropper may be able to obtain sensitive data relating to the transaction, with the risk that this information will be reused in some way to cause loss to cardholders or merchants or compromise cardholder privacy. EMV specifications contain various security mechanisms to defend against such risks, including in particular the use of RSA for encrypting the cardholder PIN when transmitted to the card. It is however known that strategies for attackers to obtain sensitive data from transaction information by eavesdropping are still being developed.

Despite existing security measures, it would therefore be desirable to take further measures to reduce any risk that sensitive information in transaction data could be compromised by eavesdroppers thereby improving data security. It would also be desirable to do this in such a way that existing infrastructure could be upgraded without fundamental modification.

Summary of Disclosure

In a first part of a first aspect, the disclosure provides a method of performing a transaction between a first computing device acting as a payment device and a second computing device acting as a terminal, the method comprising, at the first computing device: the first computing device establishing a communication channel with the second computing device and initiating the transaction; the first computing device receiving a request for processing options for the transaction from the second computing device; the first computing device indicating that it supports enhanced processing of the transaction and establishing that the second computing device also supports enhanced processing of the transaction; the first computing device providing a secure communication to the second computing device, the secure communication comprising cryptographic material comprising material to establish a symmetric cryptographic method encrypted by a public key of an asymmetric cryptographic method for the second computing device to decrypt using a private key of the asymmetric cryptographic method; and the first computing device performing enhanced processing for the transaction by communicating with the second computing device using the symmetric cryptographic method, wherein enhanced processing of the transaction comprises using a secure channel using the symmetric cryptographic method to protect privacy of information private to an owner or controller of at least the first computing device.

In a second part of a first aspect, the disclosure provides a method of performing a transaction between a second computing device acting as a terminal and a first communication device acting as a payment device, the method comprising, at the second computing device: the second computing device establishing a communication channel with the first computing device on initiation of the transaction; the second computing device sending a request for processing options for the transaction to the first computing device, wherein the second computing device is adapted to support enhanced processing of the transaction; the second computing device receiving confirmation that enhanced processing is to be used for the transaction and receiving a secure communication from the first computing device, the secure communication comprising cryptographic material comprising material to establish a symmetric cryptographic method encrypted by a public key of an asymmetric cryptographic method; the second computing device decrypting the cryptographic material using a private key of the asymmetric cryptographic method; and the second computing device performing enhanced processing for the transaction by communicating with the first computing using the further cryptographic method , wherein enhanced processing of the transaction comprises using a secure channel using the symmetric further cryptographic method to protect privacy of information private to an owner or controller of at least the first computing device.

This approach is advantageous, as it allows for security mechanisms to be upgraded to provide better trust without changing basic protocol elements of a transaction protocol. This allows a minimally disruptive way to provide a secure channel allowing two way communication between the two computing devices.

This symmetric further cryptographic method may be AES. In such embodiments, privacy protection communication between the first computing device and the second computing device may use AES counter mode, and may use an initialisation vector value that is incremented for each record enciphered for communication.

Privacy protection communication may be used for communication during the transaction of records requested by the second computing device and identified as qualifying for privacy protection as stored in the first computing device. The second computing device may then provide some or all of the records received from the first computing device using privacy protection communication for static data authentication.

In embodiments, the request for processing options may include an indication that the second computing device supports enhanced processing.

In embodiments, the cryptographic material may further comprise material to establish a further asymmetric cryptographic method to replace the asymmetric cryptographic method in one or more transaction steps. In embodiments, the asymmetric cryptographic method is RSA and the further asymmetric cryptographic method is ECC, with ECC used instead of RSA for digital signatures provided by the first communication device. In embodiments, other approaches (such as use of a Message Authentication Code) may be used instead of a digital signature to authenticate origin of information.

Providing both an upgraded asymmetric method and a symmetric method provides a flexible solution that also achieves a high level of security. Such use of an upgraded asymmetric method may allow ECC to be used instead of RSA for digital signatures, for example, while AES may be used to preserve privacy in communication between devices.

These first and second computing devices may communicate to agree a transaction for authorisation over a transaction scheme. This transaction scheme may operate according to the EMV protocol.

This approach allows existing EMV protocols to be enhanced so that ECC methods can be used rather than RSA for dynamic signatures, with AES symmetric methods used for providing privacy protection for sessions involving payment devices and terminals.

This approach may be used for contactless transactions.

In a second aspect, the disclosure provides a first computing device comprising a memory and a processor programmed to perform actions executed by the first computing device in the method of the first aspect above.

This first computing device may be a payment device adapted for use by a cardholder to make payments on behalf of the cardholder. In embodiments, this may be a payment card, or a mobile telephone or other computing device, typically acting as a proxy for a payment card.

In a third aspect, the disclosure provides a second computing device comprising a memory and a processor programmed to perform actions executed by the second computing device in the method of the first aspect above.

This second computing device may be a point of sale terminal.


Brief Description of Figures

Embodiments of the disclosure will now be described, by way of example, with reference to the accompanying Figures, of which:

Figure 1 shows schematically a transaction system using the four-party model;

Figure 2 shows an implementation of the transaction system of Figure 1 adapted for performing embodiments of the disclosure;

Figures 3A and 3B show, respectively, functional elements of a user computing device and a terminal device for use in the transaction system implementation of Figure 2;

Figure 4 shows schematically a process according to a general embodiment of the disclosure; and

Figure 5 shows schematically an EMV implementation of the process of Figure 4 between a payment device and a terminal.

Description of Specific Embodiments

General and specific embodiments of the disclosure will be described below with reference to the Figures.

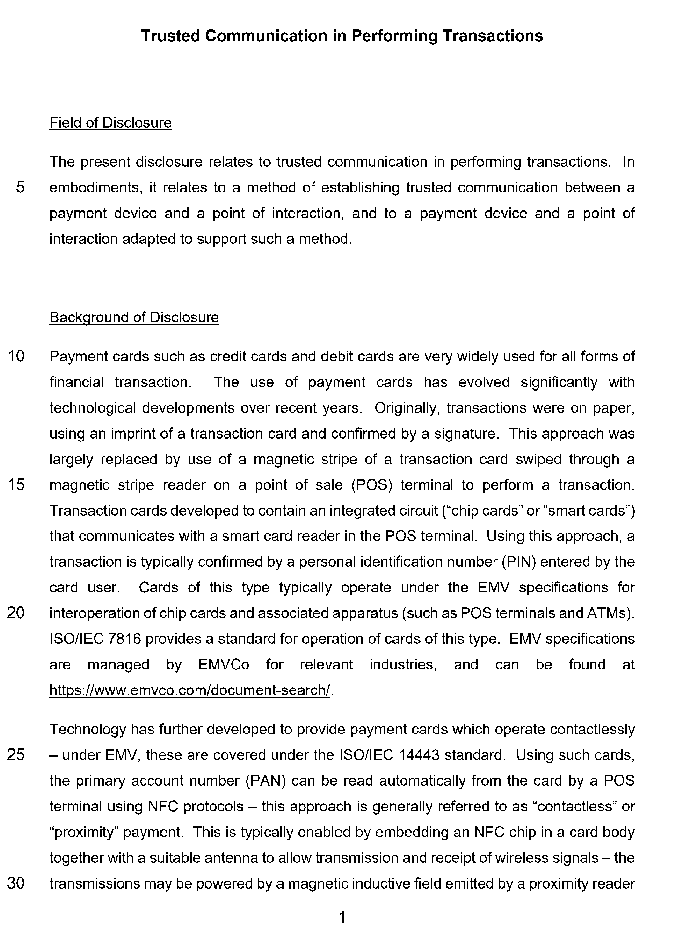

Figure 1 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. Should the transaction be considered abnormal by the issuer 130, the cardholder 110 may be required to undergo an additional verification process to verify their identity and the details of the transaction. Once the additional verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

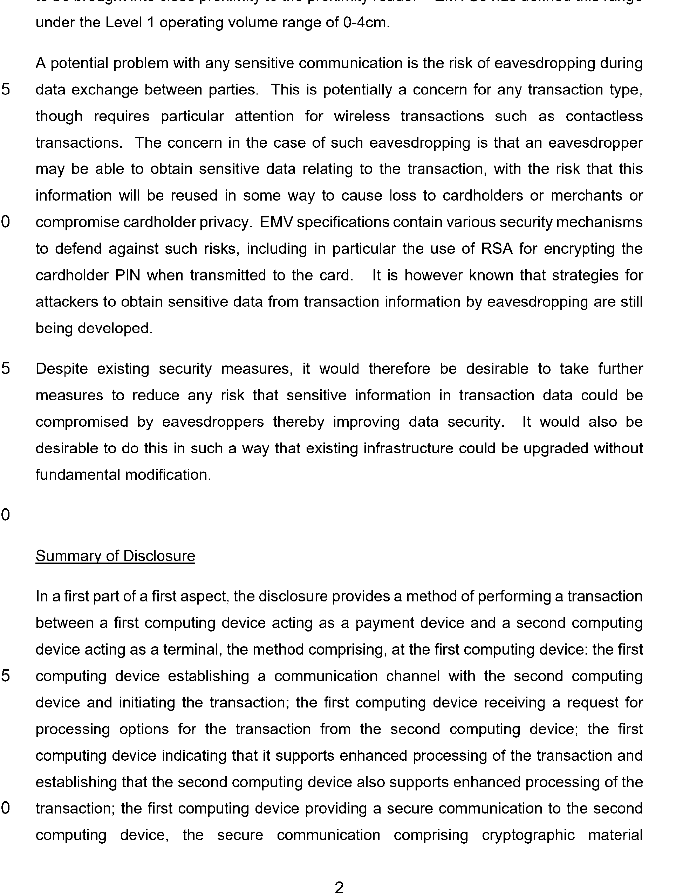

Figure 2 shows an architecture according to an embodiment of the disclosure appropriate for interaction between a user payment device and a merchant point of sale (POS) terminal using a contactless interaction.

The cardholder 1 has a user payment device 6 - here, in the form of a cellular phone handset acting as a proxy for a payment card 8. The user payment device 6 here interacts with a POS terminal 7 of a merchant 2 over NFC to perform a contactless transaction. While embodiments of the disclosure are particularly relevant to contactless transactions, they are not so limited - they also have application to a direct contact interaction between a payment card 8 and a POS terminal 7, for example.

The transaction infrastructure 5 provides the computing infrastructure necessary to operate the card scheme and provide routing of transactions and other messaging to parties such as the acquirer 3 and the issuer 4. While the Figure shows a direct relationship between the cardholder 1 and the issuer 4, and between the merchant 2 and the acquirer 3, some or all communications between them relating to transactions may in practice be mediated by the transaction infrastructure 5.

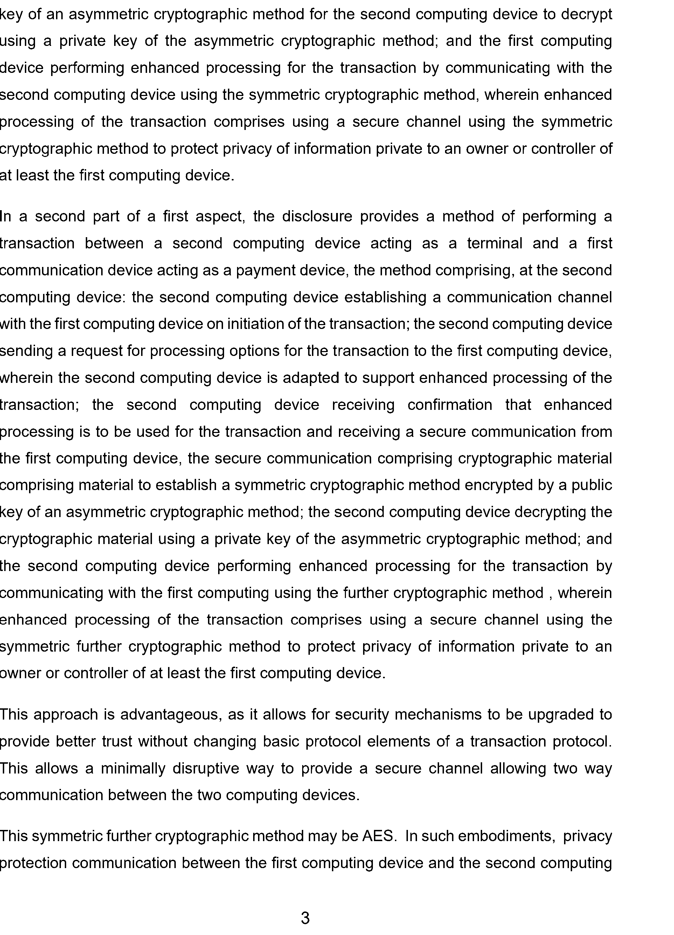

Figures 3A and 3B illustrate schematically by function a user payment device and a merchant POS device in accordance with embodiments of the disclosure. Other elements of the architecture of Figure 2 may be organised in an essentially conventional manner for an EMV transaction architecture.

Figure 3A shows a user payment device 6. The payment device 6 possesses at least one processor 31 and at least one memory 32, between them defining a computing environment 33 for performance of applications. Applications running in the computing environment include at least one payment application 331 and a proximity payment system environment 332 to support contactless transactions and may include other applications such as a wallet application 333 and a biometric application 334. A user interface application 335 supports provision of user input from and display output to the payment device user interface 34. The memory in embodiments described may comprise a physically and logically protected environment 321 for protection of sensitive data required by these applications - such secure environments may be implemented in a variety of ways (as the skilled person will appreciate) and are not shown explicitly here, but access to secure data handling is desirable for a payment application as well as for both a wallet application and a biometric application. Alternatively, the whole computing environment 33 may be designed to be physically and logically protected. The payment device 6 is here adapted for wireless communication (for example short range wireless communication using NFC), and so has a wireless communication system 35. The payment device in this case also has a biometric sensor, in this case fingerprint reader 36. Relevant features of the payment application 331 and the proximity payment system environment 332 will be discussed below.

In embodiments of the disclosure, the card 8 may interact directly with the terminal 7 - the embodiments describe interaction of a payment device with a terminal, wherein either a payment card 8 or a computing device 6 acting as a proxy for a payment card can be the payment device. The card 8 will have many of the same elements - it will have a computing environment comprising a payment application and a proximity payment system environment, and it will be adapted for short range wireless communication using NFC protocols with a terminal. The card 8 will not typically have a wallet application or a biometric sensor - it will also typically not have its own power source, but will instead be inductively powered by the terminal during an interaction.

Figure 3B shows a POS terminal 7 adapted to implement an embodiment of the disclosure. The POS terminal 7 also possesses at least one processor 31a and at least one memory 32a, between them defining a computing environment 33a for performance of applications. The applications here include a point of sale (POS) application 335 using a contact reader interface 34a for making a contact connection with a payment card 8 (though this is not discussed further as the embodiments discussed in detail below are contactless), a wireless communication interface 35a for making an NFC or other wireless connection with a user payment device 6, together with a user interface 36a (other communication options may also be provided, such as typically a connection to other networked devices within the wider network architecture). Relevant features of the POS application 335 will be described in relation to the use case discussed below.

The proximity payment system environment 332 does not itself process the transaction, but it enables communication between a payment application 331 and the terminal 7 and its point of sale application 335. It can also establish whether the payment device has a payment application 331 available to process the transaction.

The payment application 331 may be one of a number of payment applications present on the device. It may be implemented as a state machine, adapted to provide responses to commands received from the point of sale application 335 to provide the cardholder contribution to a transaction process. For this purpose, it will comprise or have access to secrets for use in cryptographic processes and data sensitive to the cardholder (such as the card number, expiry date and cardholder credentials). The payment application 331 will perform processes that may be used by transaction processes - such as cardholder verification - and provides an application cryptogram used by the issuer in determining whether the transaction is to be authorised.

The point of sale application 335 establishes communication with the payment device through the proximity payment system environment 332 and establishes a connection with a suitable payment application 331. The point of sale application is provided with details of the transaction (these may be determined through other processes at the terminal interacting with the point of sale application 335), and communicates with the payment application to establish that the payment device is valid and to obtain an application cryptogram that can be sent with the transaction details so that the transaction can be authorised by the issuer of the cardholder.

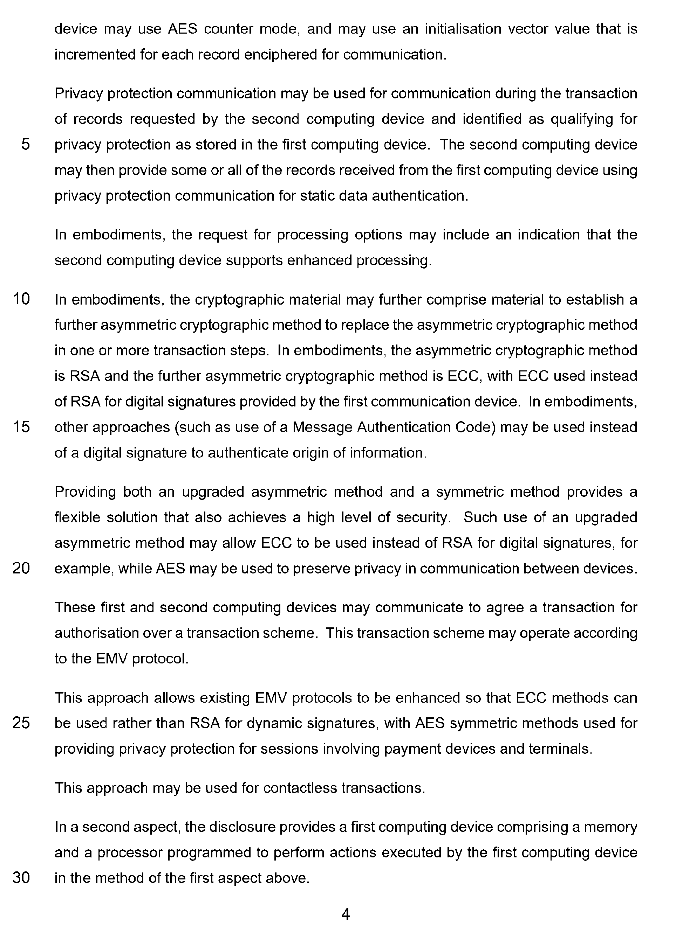

A process according to an embodiment of the disclosure is described generally with respect to Figure 4. Communication is established 410 between a first party 400 and a second party 401 in a transaction process. The first party encrypts 420 cryptographic material using an asymmetric cryptographic method, and transmits 430 the encrypted cryptographic material to the second party. The second party decrypts 440 the encrypted cryptographic material using a private key that it already possesses, and obtains the cryptographic material in usable form. The cryptographic material may then be used to support encrypted communication 450 between the first party and the second party using a further cryptographic method. In embodiments, the asymmetric protocol is RSA, and the further cryptographic protocol is a symmetric protocol (such as AES) used for privacy protection - in other embodiments, there may also be cryptographic material relating to another asymmetric protocol conveyed, allowing for example RSA to be replaced by ECC for digital signatures (for example, for dynamic card authentication).

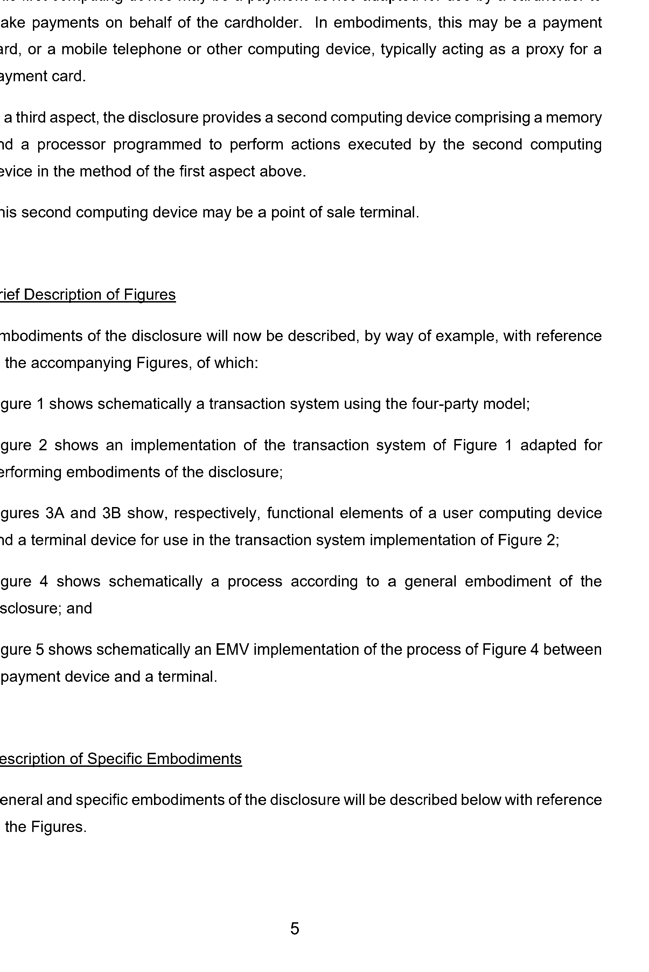

An EMV-type contactless transaction implementing an embodiment of the disclosure will now be described in more detail - basic steps in the transaction process are shown in Figure 5 (a full EMV transaction protocol will be well known to the person skilled in the art, and can be found in EMV specifications as indicated previously). The transaction steps are shown taking place between a payment device (which may be either a payment card 8 or a computing device such as a mobile phone 6 programmed to act as a proxy for a payment card, so the general term payment device is used) and a terminal 7 such as a point of sale terminal.

On establishment of communication 510 between the payment device 6, 8 and the terminal 7, the terminal issues a Get Processing Options command 520, to which the card responds with a GPO response 530 which includes an Application Interchange Profile (AIP) and Application File Locator (AFL). In general terms, this is a conventional EMV process - however in this case the Get Processing Options command 520 and the GPO response 530 may indicate that the terminal and the payment device both support use of a privacy protection mechanism and ECC digital signatures. This process is described below as XDA - Extended Data Authentication - as it goes beyond currently used cryptographic data authentication processes such as static data authentication (SDA), dynamic data authentication (DDA) and combined DDA and generation of an Application Cryptogram (CDA). The GPO response 530 includes an RSA encrypted element including an AES session key - in the embodiment described, an ECC public key for the payment device is also included. When trusted communication using a further cryptographic method is required 540, this data is encrypted or signed by the relevant device using the further cryptographic method enabled by the cryptographic material included in the RSA encrypted element, and communicated for use by the other device 550. These individual steps, and their application to existing EMV processes, will be described below.

The AES encryption and XDA processes here described are of particular value for contactless transactions as there may be perceived to be a greater eavesdropping risk and speed requirement than for contact transactions - one option would therefore be for the AES encryption and XDA process to be available for use for transactions of any kind, but in practice only selected for contactless transactions.

Application Selection

The SELECT command is used to select which payment application is to be used. When an application is selected, the payment device responds with a Processing Options Data Objects List (PDOL), indicating the data items that it requires from the terminal to perform its functions for the transaction. In addition to existing EMV functionality, the enhanced process (also termed "privacy protection" below) requires two additional data items: Terminal Public Exponent Indicator and Terminal Public Key Modulus. Tags are selected for these items such that the tags can be ignored by legacy terminals that do not support this functionality. These tags are here included at the end of PDOL with each DOL entry specifying a length of one byte.

Get Processing Options

The Get Processing Options command is used by the terminal to establish with the card what processing steps are to apply to the present transaction - the card responds with a response comprising an Application Interchange Profile (AIP). The terminal populates the Terminal Public Exponent Indicator and Terminal Public Key Modulus in the PDOL data of the Get Processing Options command. A legacy terminal or a terminal not supporting privacy protection would populate both Terminal Public Exponent Indicator and Terminal Public Key Modulus as one byte of '00'. The one byte Terminal Public Key Modulus can then be used by the card to detect that the terminal does not support privacy protection. If the length of the Terminal Public Key Modulus is not 1, not at least 96 bytes, and not a multiple of 16 bytes the card would return a length error.

The card then responds to the Get Processing Options command with an AIP that indicates that XDA is supported. An exemplary AIP structure is shown in Table 1 below, which indicates that XDA is supported in byte 2 bit 7.

Table 1 - AIP showing XDA support

| Application Interchange Profile | | |
|---|---|---|
| Byte 1 | b8 | RFU |
| | b7 | SDA Supported |
| Application Interchange Profile | | |
| | b6 | DDA supported |
| | b5 | Cardholder verification is supported |
| | b4 | Terminal risk management is to be performed |
| | b3 | Issuer Authentication is supported |
| | b2 | On device cardholder verification is supported |
| | b1 | CDA supported |

(continued)

| Application Interchange Profile | | |
|---|---|---|
| Byte 2 | b8 | EMV mode is supported |
| | b7 | XDA supported |
| | b6-2 | Each bit RFU |
| | b1 | Relay resistance protocol is supported |

If the card has detected the terminal supports privacy protection it creates an RSA Encrypted Payload in the following way. A random 16 byte AES privacy protection session key is generated. A buffer the size of the Terminal Public Key Modulus is populated with '7F' | Number of Session Keys ('01') | Privacy Protection Session Key | App Data Tag ('70' or 'EF') | Length App Data | App Data and filling the remaining space with random data. (In practice the initial buffer byte might be extended to provide more structure). The buffer is then RSA encrypted with the Terminal Public Key Modulus and the exponent indicated by the Terminal Public Exponent Indicator. In an embodiment, the App Data consists of the Primary Account Number (PAN), Track 2 Equivalent Data (as defined in EMV specifications), and the payment device ECC Public Key, including their tags and lengths. The App Data Tag, Length, and Value will be personalised in the card, and can be personalised in a record for use when the terminal does not support privacy protection to allow the same payment device public key certificate to be reused. Care must be taken when selecting the tag value for the ECC Public Key as the record would need to be accepted by legacy terminals.

For example, using this approach the plaintext prior to RSA encryption would be of the form: 7F010123456789ABCDEFFEDCBA987654321070415A0854133390000015135712541 3339000001513D20122010 000000000009F682043CA1837F6B4321CA70262902037E FCE790DC583828AEA628FFAAEFC08618658 followed by the random padding to the length of the buffer

If the card has detected the terminal supports privacy protection (Terminal Public Key Modulus length not equal to 1) it responds with the Privacy Protection AFL (Application File Locator). AFL is a standard EMV field, but the Privacy Protection AFL differs slightly in that it doesn't identify the record that contains the App Data. This new Privacy Protection AFL is personalised in the payment device.

The RSA Encrypted Payload is thus returned to the terminal in the Get Processing Options response, and the terminal can start to decrypt it in parallel to reading the card data. In addition to the RSA Encrypted Payload, a one byte Algorithm Suite Indicator with value '00' is returned - this can be hard coded in the application and does not require personalisation. Alternatively, this can be provided in the response to the SELECT command.

The application maintains a 16 byte IV value that is initialised to 00000000000000000000000000000000 during the Get Processing Options command.

In embodiments, when storing the PDOL Related Data for subsequent signature generation any supplied Terminal Public Key Modulus may be truncated after the first byte.

An exemplary Get Processing Options Response using this approach is shown in Table 2 below.

Table 2 - Privacy Protection Get Processing Options Response

| Tag | Length | Value |
|---|---|---|
| '82' | '02' | Application Interchange Profile |
| '94' | variable | Application File Locator |
| '9F60' | variable | Conditional RSA Encrypted Payload |
| '9F61' | '01' | Conditional Algorithm Suite Indicator |

Once the RSA Encrypted Payload has been decrypted the terminal should extract the Privacy Protection Session Key from the 3rd to the 18th byte of the recovered plaintext and the App Data from an offset from the 2nd byte determined by multiplying the value of the 2nd byte by 16 and ensuring that no buffer overrun occurs. If a buffer overrun is detected the transaction is terminated.

At this point, the terminal and payment device are now equipped for privacy protection as enhanced security is available. An AES session key has been shared for general protection of communications between the terminal and the payment device - AES is the generally used standard for symmetric encryption. In addition, an ECC public key for the payment device has been provided to the terminal so that the card can use its ECC private key for digital signatures. The use of this approach will be described further by application to other EMV commands.

Read Record

A READ RECORD command asks the payment device to provide certain data. A tag can be used at the start of a record to indicate whether privacy protection should be used or not. For example, 'EF' may be used for privacy protection, and '70' for no privacy protection required. If '70' is used, then the record can be returned in plaintext, and if privacy protection is not supported by the terminal, the tag can be changed to '70' and the record returned in plaintext (in the absence of any practical alternative).

When a Read Record command is received the card application inspects the template tag at the start of the record. If the template tag is 'EF' and the card has detected that the terminal supports privacy protection then the card enciphers the value field of the record template.

In embodiments, privacy protection in providing the record may be achieved by using AES Counter (CTR) mode with the privacy protection session key generated during the Get Processing Options command and the current value of the Privacy Protection IV. Counter (CTR) mode is the preferred method as this will prevent expansion of the enciphered data. After the encipherment, the first eight bytes of the Privacy Protection IV are incremented so that a new IV value is used for each record that is enciphered. The enciphered record with the 'EF' tag is returned to the terminal. As the record has an 'EF' tag, the terminal knows that the record needs to be deciphered. The terminal is able to do this once the privacy protection session key becomes available after decryption of the RSA Encrypted Payload.

Generate AC

GENERATE AC (Application Cryptogram) is the central command in the transaction process between the payment device and the terminal - the terminal commands the payment device to provide an application cryptogram for indicating to the payment device issuer what has been agreed between the terminal and the payment device in respect of the transaction and providing evidence to the issuer that it is a legitimate use of the indicated payment device. Using the privacy protection process described, existing application cryptogram generation can be modified to support use of ECC signatures, rather than RSA signatures as previously without revealing to an eavesdropper the ECC public key value that could be used to track the payment device. This approach may similarly be used for other asymmetric encryption models and not solely ECC.

To indicate this, two new bits may be defined in the P1 parameter of GENERATE AC to allow XDA ECC signatures to be requested. For existing definition of GENERATE AC, the person skilled in the art is directed to the EMVCo specifications as previously. The resulting definition of the P1 parameter is as set out in Table 3 below.

Table 3 - Reference Control Parameter P1 Coding for First Generate AC

| b8 | b7 | b6 | b5 | b4 | b3 | b2 | b1 | Meaning |
|----|----|----|----|----|----|----|----|---------|
| x | x | | | | | | | 'Cryptogram Type' |
| 0 | 0 | | | | | | | AAC |
| 0 | 1 | | | | | | | TC |
| 1 | 0 | | | | | | | ARQC |
| 1 | 1 | | | | | | | RFU |
| | | 0 | | | | | | Other values RFU |
| | | | 0 | 0 | 0 | | | 'CDA/XDA Generation Not Requested' |
| | | | 1 | 0 | 0 | | | 'Combined DDA/AC Generation Requested' |
| | | | 0 | 1 | 0 | | | 'XDA for TC Responses Requested' |
| | | | 0 | 1 | 1 | | | 'XDA for All Responses Requested' |
| | | | x | x | x | | | Other values RFU |
| | | | | | | 0 | 0 | Other values RFU |

For security purposes, XDA may be considered equivalent to CDA (as discussed above), and consequently the Card Verification Results are treated as being the same as if CDA had been performed (i.e. the CDA Returned In First/Second Gen AC bits become CDA/XDA Returned In First/Second Gen AC). The same principle applies to the Decline If CDA Not Performed And RRP Performed bit in Application Control - it becomes Decline If CDA/XDA Not Performed And RRP Performed.

The Generate AC Response contains the same data items as a non-CDA response (i.e. with Application Cryptogram), but may be extended if RRP (Relay Resistance Protocol - an EMV specification option for prevention of relay attacks) is performed. This extension may be provided by adding RRP Data with a 14 byte value consisting of the concatenation of Terminal Relay Resistance Entropy, Device Relay Resistance Entropy, Min Time For Processing Relay Resistance APDU, and Transmission Time For Relay Resistance R-APDU.

If an XDA signature is requested, and in the case of 'XDA for TC Responses Requested' a TC response is determined, the payment device generates an ECC signature. A TC (Transaction Certificate) response is an Application Cryptogram used for a transaction approved by a payment device - after which the transaction can complete. The ECDSA - Elliptic Curve Digital Signature Algorithm - is one recognised way of producing digital signatures using ECC. Other forms of ECC signature may also be used, for example the Schnorr variant ECSDSA. Alternatives to a digital signature may also be used - other approaches to confirming authentic origin of information include use of a Message Authentication Code (MAC) using an AES key. The ECC signature may be generated with the SHA-256 cryptographic hash algorithm over PDOL Related Data, CDOL1 Related Data, CDOL2 Related Data (in case of a 2nd Gen AC), and Generate AC Response Data (except the Signed Dynamic Application Data). As before, these are all established EMV data fields, and the person skilled in the art is directed to EMVCo specifications for further reference. The ECC signature consists of a pair (r,s), in this case provided as the 32 byte value of r followed by the 32 byte value of s. This 64 byte signature is returned as the Signed Dynamic Application Data. The NIST P-256 curve is used as specified in Table 4 below.

Table 4 - Parameters of NIST P-256 Curve

| Parameter | Value |
|---|---|
| $p =$ | $2^{256} - 2^{224} + 2^{192} + 2^{96} - 1 =$<br>115 79208 92103 56248 76269 74469 49407 57353 00861 43415 29031 41955 33631 30886 70978 53951<br>FFFFFFFF 00000001 00000000 00000000 00000000 FFFFFFFF FFFFFFFF FFFFFFFF |
| $n =$ | 115 79208 92103 56248 76269 74469 49407 57352 99969 55224 13576 03424 22259 06106 85120 44369<br>FFFFFFFF 00000000 FFFFFFFF FFFFFFFF BCE6FAAD A7179E84 F3B9CAC2 FC632551 |
| $a =$ | FFFFFFFF 00000001 00000000 00000000 00000000 FFFFFFFF FFFFFFFF FFFFFFFC |
| $b =$ | 5AC635D8 AA3A93E7 B3EBBD55 769886BC 651F06B0 CC53B0F6 3BCE3C3E 27D2604B |
| $G_x =$ | 6B1701F2 E12C4247 F8BCE6E5 63A440F2 77037B81 2DEB33A0 F4A13945 D898C296 |
| $G_y =$ | 4FE342E2 FE1A7F9B 8EE7EB4A 7C0F9E16 2BCE3357 6B315ECE CBB64068 37BF51F5 |

A complete Generate AC Response may thus be as indicated in Table 5 below.

Table 5 - Generate AC Response using Privacy Protection

| Tag | Length | Value |
|---|---|---|
| '9F27' | '01' | Cryptogram Information Data |
| '9F36' | '02' | Application Transaction Counter |
| '9F26' | '08' | Application Cryptogram |
| '9F10' | '12', '14','1A', or '1C' | Issuer Application Data |
| '9F62' | '0E' | Conditional RRP Data |
| '9F4B' | '40' | Conditional Signed Dynamic Application Data |

When the terminal has received the Generate AC Response and has finished decrypting the RSA Encrypted Payload and deciphering the enciphered Read Record Responses it proceeds to verify the XDA signature contained in the Signed Dynamic Application Data. The most efficient way to verify the signature is to calculate the y-coordinate of the payment device ECC Public Key from the x-coordinate contained in the ECC Public Key as follows:

$$y' = (x^3 + ax + b)^{((p+1)/4)} \bmod p$$

$$y = min(y',p-y')$$

Having determined the x and y coordinates of the payment device ECC Public Key Q = (x,y), the ECC signature (r & s) can be verified which for ECDSA is performed in the following way (this will typically be available as a primitive in a crypto library covering ECC - this may be held in the terminal).

$$e = SHA256(PDOL\ Related\ Data\ |\ CDOL1\ Related\ Data\ |\ CDOL2\ Related\ Data$$

(in case of a 2nd Gen AC) | Generate AC Response Data)

$w = s^{-1} \bmod n$
$u_1 = ew \bmod n$
$u_2 = rw \bmod n$
Calculate the point $(x_1,y_1) = u_1G + u_2Q$. If $(x_1,y_1)$ is infinity the signature is invalid.
The signature is valid if $r = x_1 \bmod n$

Other approaches to verification are possible (for example, if the crypto library used by the terminal supports ANSI/SEC compressed point representation, this may be used).

Static Data Authentication

Static Data Authentication is an EMV cryptographic check process to ensure that static data read from the payment device has not been modified or is otherwise not legitimate. For XDA, a new data item Extended SDA Tag List may be defined that contains a list of the tags of data items to be included in the static data to be authenticated. Again, the tag value used for the Extended SDA Tag List needs to be selected so that legacy terminals can ignore the data item. The Extended SDA Tag List can be stored in a signed plaintext record and would typically identify the data items included in the App Data in the RSA Encrypted Payload.

When privacy protection is invoked (Terminal Public Key Modulus length not equal to 1), the terminal assembles the static data to be authenticated by concatenating the records indicated in the AFL as participating in offline data authentication (excluding the '70' template tag and record length), followed by the data items identified in the Extended SDA Tag List (including their tags and lengths), and finally the value field of the AIP (excluding its tag and length) if the SDA Tag List exists (it must only contain the AIP). If privacy protection has not been invoked (Terminal Public Key Modulus length equal to 1) the Extended SDA Tag List is ignored.

In this manner the same payment device Public Key Certificate can be used on legacy terminals (where the App Data which in the described embodiment consists of PAN, Track 2 Equivalent Data, and ICC ECC Public Key are returned in a Read Record response) and on terminals supporting privacy protection (where PAN, Track 2 Equivalent Data, and ICC ECC Public Key are returned in the RSA Encrypted Payload). If payment device Public Key Certificates are to be reused, care must be taken to ensure that the signed data identified by the Privacy Protection AFL, Extended SDA Tag List, and SDA Tag List is exactly the same as the data identified by the legacy AFL and SDA Tag List.

Generate ECC Key

The payment device ECC key will in some embodiments be personalised into the card. In other embodiments, a payment device may not be provisioned with an ECC key pair, and is instead instructed to generate one when required with a GENERATE ECC KEY command. This is a new command type, and would be answered with response data that consists of the 32 byte x-coordinate of the ECC public key that has been generated. The corresponding private key would be stored in the payment application.

The following method of elliptic curve key pair generation can be used, which follows ISO/IEC 15946-1.

The private key $d$ for a given elliptic curve E with base point G of order n consists of a positive integer $d$, satisfying $1 < d < n-1$.

The corresponding public key point is $P = dG$ on the curve $E$.

Given an elliptic curve, all parameters including the base point are fixed. Therefore, key generation consists solely of random or pseudorandom generation of $d$ and subsequent computation of the public key point $P = dG$ and thereby its x-coordinate representation.

In embodiments described here, public keys are represented using only their x-coordinate. For any non-zero point $(x,y)$ on the curve, $(x,-y)$ will also be on the curve. The signature verification is sensitive to the value of the y-coordinate. For this reason the card ECC key must be generated to ensure that the verifier can determine the correct value of the y-coordinate of the Public Key from knowledge of only the x-coordinate.

This can be achieved if payment device keys are generated to ensure that the y-coordinate as an integer modulo $p$ is less than $(p+1)/2$. This enables the terminal to generate the correct y-coordinate given the correct x-coordinate.

Two approaches to achieve this are described below - the first approach involves more computation, but the second approach may require additional logic.

1) Repeatedly generate a random non-negative integer $d$ satisfying $1 < d < n-1$ - until the y-coordinate of $dG$ is less than $(p+1)/2$.

2) Generate a random non-negative integer $d'$ satisfying $1 < d < n-1$ and if the y-coordinate of $d'G$ is less than $(p+1)/2$ then $d := d'$ else set $d := n - d'$.

The public key is then calculated to be the point $P = dG$ and its representation is the x-coordinate of P.

Even if an ECC pair has originally been provisioned, or if an ECC pair has been generated, it may be desirable to allow provisioning of a new ECC pair to the card if required, or to require a new ECC pair to be generated in appropriate circumstances. As can be seen, this approach allows for enhanced security in transactions by using a secure transmission scheme that already exists in the protocol - in this case, asymmetric encryption using RSA - as the basis for transmitting cryptographic material for establishing one or more further secure transmission schemes - in this case, symmetric encrypted communication using an AES session key for privacy protection, and an asymmetric mechanism using ECC for improved digital signatures. While both a symmetric and an asymmetric mechanism are provided here, embodiments may provide only one of these enhancements - for example, simply the provision of an ECC public key within an RSA encrypted element to allow digital signatures to be carried out using ECC rather than RSA. This allows security of the transmissions to be improved significantly while enhancing, without fundamentally changing, existing transaction protocols. This approach could be used to incorporate new secure transmission paradigms in the same way - for example, another symmetric mechanism rather than AES, or another asymmetric mechanism rather than ECC.

As the person skilled in the art will appreciate, modifications and variations to the above embodiments may be provided, and further embodiments may be developed, without departing from the spirit and scope of the disclosure. Reference to standards and proprietary technologies are provided for the purpose of describing effective implementations, and do not limit the scope of the disclosure.

Aspects of the disclosure are described in the following clauses:

1. A method for a first computing device to establish trusted communication with a second computing device in a transaction process, the method comprising, during a transaction process:

the first computing device establishing a communication channel with the second computing device;

the first computing device providing a secure communication to the second computing device, the secure communication comprising cryptographic material encrypted by a public key of an asymmetric cryptographic method for the second computing device to decrypt using a private key of the asymmetric cryptographic method; and

the first computing device communicating with the second computing device for trusted communication using a further cryptographic method using the cryptographic material.

2. A method for a second computing device to establish trusted communication with a first communication device in a transaction process, the method comprising, during a transaction process:

the second computing device establishing a communication channel with the first computing device;

the second computing device receiving a secure communication from the first computing device, the secure communication comprising cryptographic material encrypted by a public key of an asymmetric cryptographic method;

the second computing device decrypting the cryptographic material using a private key of the asymmetric cryptographic method; and

the second computing device communicating with the first computing device for trusted communication using a further cryptographic method using the cryptographic material.

3. The method of clause 1 or clause 2, wherein the further cryptographic method is symmetric and trusted communication is provided by a secure channel using the symmetric further cryptographic method to protect privacy of information private to an owner or controller of at least the first computing device.

4. The method of clause 3, wherein the symmetric further cryptographic method is AES.

5. The method of clause 1 or clause 2, wherein the further cryptographic method is asymmetric and trusted communication is provided by using the asymmetric further cryptographic method to replace the asymmetric cryptographic method in one or more processes.

6. The method of clause 5, wherein the asymmetric cryptographic method is RSA and the further asymmetric cryptographic method is ECC, and wherein ECC is used instead of RSA for digital signatures provided by the first communication device.

7. The method of clause 1 or clause 2, wherein there is more than one further cryptographic method, wherein the more than one further cryptographic methods comprise a symmetric further cryptographic method and an asymmetric further cryptographic method.

8. The method of any preceding clause, wherein the first and second computing devices communicate to agree a transaction for authorisation over a transaction scheme.

9. The method of clause 7 or clause 8, wherein the transaction process is a contactless transaction.

10. A first computing device comprising a memory and a processor programmed to perform actions executed by the first computing device in the method of any of clauses 1 and 3 to 9 where dependent on clause 1.

11. The first computing device according to clause 10, wherein the first computing device is a payment device adapted for use by a cardholder to make payments on behalf of the cardholder.

12. The first computing device according to clause 10, wherein the payment device is a payment card.

13. The first computing device according to clause 10, wherein the payment card is a mobile telephone.

14. A second computing device comprising a memory and a processor programmed to perform actions executed by the second computing device in the method of any of clauses 2 and 3 to 9 where dependent on clause 2.

15. The second computing device according to clause 14, wherein the second computing device is a point of sale terminal.

## Claims

1. A method of performing a transaction between a first computing device acting as a payment device and a second computing device acting as a terminal, the method comprising, at the first computing device:

   the first computing device establishing a communication channel with the second computing device and initiating the transaction;
   the first computing device receiving a request for processing options for the transaction from the second computing device;
   the first computing device indicating that it supports enhanced processing of the transaction and establishing that the second computing device also supports enhanced processing of the transaction;
   the first computing device providing a secure communication to the second computing device, the secure communication comprising cryptographic material comprising material to establish a symmetric cryptographic method encrypted by a public key of an asymmetric cryptographic method for the second computing device to decrypt using a private key of the asymmetric cryptographic method; and
   the first computing device performing enhanced processing for the transaction by communicating with the second computing device using the symmetric cryptographic method, wherein enhanced processing of the transaction comprises using a secure channel using the symmetric cryptographic method to protect privacy of information private to an owner or controller of at least the first computing device.

2. A method of performing a transaction between a second computing device acting as a terminal and a first communication device acting as a payment device, the method comprising, at the second computing device:

the second computing device establishing a communication channel with the first computing device on initiation of the transaction;

the second computing device sending a request for processing options for the transaction to the first computing device, wherein the second computing device is adapted to support enhanced processing of the transaction;

the second computing device receiving confirmation that enhanced processing is to be used for the transaction and receiving a secure communication from the first computing device, the secure communication comprising cryptographic material comprising material to establish a symmetric cryptographic method encrypted by a public key of an asymmetric cryptographic method;

the second computing device decrypting the cryptographic material using a private key of the asymmetric cryptographic method; and

the second computing device performing enhanced processing for the transaction by communicating with the first computing using the further cryptographic method , wherein enhanced processing of the transaction comprises using a secure channel using the symmetric further cryptographic method to protect privacy of information private to an owner or controller of at least the first computing device.

3. The method of claim 1 or claim 2, wherein the symmetric further cryptographic method is AES.

4. The method of claim 3, wherein privacy protection communication between the first computing device and the second computing device uses AES counter mode.

5. The method of claim 4, wherein communication in AES counter mode uses an initialisation vector value that is incremented for each record enciphered for communication.

6. The method of any preceding claim, wherein privacy protection communication is used for communication during the transaction of records requested by the second computing device and identified as qualifying for privacy protection as stored in the first computing device.

7. The method of claim 6 where dependent on claim 2, further comprising the second computing device providing some or all of the records received from the first computing device using privacy protection communication for static data authentication.

8. The method of any preceding claim, wherein the request for processing options includes an indication that the second computing device supports enhanced processing.

9. The method of any preceding claim, wherein the cryptographic material further comprises material to establish a further asymmetric cryptographic method, wherein the further asymmetric cryptographic method is used to replace the asymmetric cryptographic method in one or more transaction steps, wherein the asymmetric cryptographic method is RSA and the further asymmetric cryptographic method is ECC, and wherein ECC is used instead of RSA for digital signatures provided by the first communication device.

10. The method of any preceding claim, wherein the transaction process is a contactless transaction.

11. A first computing device comprising a memory and a processor programmed to perform actions executed by the first computing device in the method of any of claims 1 and 3 to 10 where dependent on claim 1.

12. The first computing device according to claim 11, wherein the first computing device is a payment device adapted for use by a cardholder to make payments on behalf of the cardholder.

13. The first computing device according to claim 11, wherein the payment device is one of a payment card and a mobile telephone.

14. A second computing device comprising a memory and a processor programmed to perform actions executed by the second computing device in the method of any of claims 2 and 3 to 10 where dependent on claim 2.

**15.** The second computing device according to claim 14, wherein the second computing device is a point of sale terminal.

# Trusted Communication in Performing Transactions

Field of Disclosure

The present disclosure relates to trusted communication in performing transactions. In embodiments, it relates to a method of establishing trusted communication between a payment device and a point of interaction, and to a payment device and a point of interaction adapted to support such a method.

Background of Disclosure

Payment cards such as credit cards and debit cards are very widely used for all forms of financial transaction. The use of payment cards has evolved significantly with technological developments over recent years. Originally, transactions were on paper, using an imprint of a transaction card and confirmed by a signature. This approach was largely replaced by use of a magnetic stripe of a transaction card swiped through a magnetic stripe reader on a point of sale (POS) terminal to perform a transaction. Transaction cards developed to contain an integrated circuit ("chip cards" or "smart cards") that communicates with a smart card reader in the POS terminal. Using this approach, a transaction is typically confirmed by a personal identification number (PIN) entered by the card user. Cards of this type typically operate under the EMV specifications for interoperation of chip cards and associated apparatus (such as POS terminals and ATMs). ISO/IEC 7816 provides a standard for operation of cards of this type. EMV specifications are managed by EMVCo for relevant industries, and can be found at https://www.emvco.com/document-search/.

Technology has further developed to provide payment cards which operate contactlessly – under EMV, these are covered under the ISO/IEC 14443 standard. Using such cards, the primary account number (PAN) can be read automatically from the card by a POS terminal using NFC protocols – this approach is generally referred to as "contactless" or "proximity" payment. This is typically enabled by embedding an NFC chip in a card body together with a suitable antenna to allow transmission and receipt of wireless signals – the transmissions may be powered by a magnetic inductive field emitted by a proximity reader

1

under the Level 1 operating volume range of 0-4cm.

A potential problem with any sensitive communication is the risk of eavesdropping during data exchange between parties. This is potentially a concern for any transaction type, though requires particular attention for wireless transactions such as contactless transactions. The concern in the case of such eavesdropping is that an eavesdropper may be able to obtain sensitive data relating to the transaction, with the risk that this information will be reused in some way to cause loss to cardholders or merchants or compromise cardholder privacy. EMV specifications contain various security mechanisms to defend against such risks, including in particular the use of RSA for encrypting the cardholder PIN when transmitted to the card. It is however known that strategies for attackers to obtain sensitive data from transaction information by eavesdropping are still being developed.

Despite existing security measures, it would therefore be desirable to take further measures to reduce any risk that sensitive information in transaction data could be compromised by eavesdroppers thereby improving data security. It would also be desirable to do this in such a way that existing infrastructure could be upgraded without fundamental modification.

Summary of Disclosure

In a first part of a first aspect, the disclosure provides a method of performing a transaction between a first computing device acting as a payment device and a second computing device acting as a terminal, the method comprising, at the first computing device: the first computing device establishing a communication channel with the second computing device and initiating the transaction; the first computing device receiving a request for processing options for the transaction from the second computing device; the first computing device indicating that it supports enhanced processing of the transaction and establishing that the second computing device also supports enhanced processing of the transaction; the first computing device providing a secure communication to the second computing device, the secure communication comprising cryptographic material

2

key of an asymmetric cryptographic method for the second computing device to decrypt using a private key of the asymmetric cryptographic method; and the first computing device performing enhanced processing for the transaction by communicating with the second computing device using the symmetric cryptographic method, wherein enhanced processing of the transaction comprises using a secure channel using the symmetric cryptographic method to protect privacy of information private to an owner or controller of at least the first computing device.

In a second part of a first aspect, the disclosure provides a method of performing a transaction between a second computing device acting as a terminal and a first communication device acting as a payment device, the method comprising, at the second computing device: the second computing device establishing a communication channel with the first computing device on initiation of the transaction; the second computing device sending a request for processing options for the transaction to the first computing device, wherein the second computing device is adapted to support enhanced processing of the transaction; the second computing device receiving confirmation that enhanced processing is to be used for the transaction and receiving a secure communication from the first computing device, the secure communication comprising cryptographic material comprising material to establish a symmetric cryptographic method encrypted by a public key of an asymmetric cryptographic method; the second computing device decrypting the cryptographic material using a private key of the asymmetric cryptographic method; and the second computing device performing enhanced processing for the transaction by communicating with the first computing using the further cryptographic method , wherein enhanced processing of the transaction comprises using a secure channel using the symmetric further cryptographic method to protect privacy of information private to an owner or controller of at least the first computing device.

This approach is advantageous, as it allows for security mechanisms to be upgraded to provide better trust without changing basic protocol elements of a transaction protocol. This allows a minimally disruptive way to provide a secure channel allowing two way communication between the two computing devices.

This symmetric further cryptographic method may be AES. In such embodiments, privacy protection communication between the first computing device and the second computing

3

device may use AES counter mode, and may use an initialisation vector value that is incremented for each record enciphered for communication.

Privacy protection communication may be used for communication during the transaction of records requested by the second computing device and identified as qualifying for privacy protection as stored in the first computing device. The second computing device may then provide some or all of the records received from the first computing device using privacy protection communication for static data authentication.

In embodiments, the request for processing options may include an indication that the second computing device supports enhanced processing.

In embodiments, the cryptographic material may further comprise material to establish a further asymmetric cryptographic method to replace the asymmetric cryptographic method in one or more transaction steps. In embodiments, the asymmetric cryptographic method is RSA and the further asymmetric cryptographic method is ECC, with ECC used instead of RSA for digital signatures provided by the first communication device. In embodiments, other approaches (such as use of a Message Authentication Code) may be used instead of a digital signature to authenticate origin of information.

Providing both an upgraded asymmetric method and a symmetric method provides a flexible solution that also achieves a high level of security. Such use of an upgraded asymmetric method may allow ECC to be used instead of RSA for digital signatures, for example, while AES may be used to preserve privacy in communication between devices.

These first and second computing devices may communicate to agree a transaction for authorisation over a transaction scheme. This transaction scheme may operate according to the EMV protocol.

This approach allows existing EMV protocols to be enhanced so that ECC methods can be used rather than RSA for dynamic signatures, with AES symmetric methods used for providing privacy protection for sessions involving payment devices and terminals.

This approach may be used for contactless transactions.

In a second aspect, the disclosure provides a first computing device comprising a memory and a processor programmed to perform actions executed by the first computing device in the method of the first aspect above.

4

ake payments on behalf of the cardholder. In embodiments, this may be a payment ird, or a mobile telephone or other computing device, typically acting as a proxy for a iyment card.

a third aspect, the disclosure provides a second computing device comprising a memory id a processor programmed to perform actions executed by the second computing ivice in the method of the first aspect above.

iis second computing device may be a point of sale terminal.

ief Description of Figures

nbodiments of the disclosure will now be described, by way of example, with reference the accompanying Figures, of which:

gure 1 shows schematically a transaction system using the four-party model;

gure 2 shows an implementation of the transaction system of Figure 1 adapted for irforming embodiments of the disclosure;

gures 3A and 3B show, respectively, functional elements of a user computing device id a terminal device for use in the transaction system implementation of Figure 2;

gure 4 shows schematically a process according to a general embodiment of the sclosure; and

gure 5 shows schematically an EMV implementation of the process of Figure 4 between payment device and a terminal.

escription of Specific Embodiments

eneral and specific embodiments of the disclosure will be described below with reference the Figures.

| | Europäisches Patentamt<br>European Patent Office<br>Office européen des brevets | **EUROPEAN SEARCH REPORT** | **Application Number**<br>**EP 25 19 7626** |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | RESCORLA MOZILLA E: "The Transport Layer Security (TLS) Protocol Version 1.3; rfc8446.txt",<br>THE TRANSPORT LAYER SECURITY (TLS) PROTOCOL VERSION 1.3; RFC8446.TXT, INTERNET ENGINEERING TASK FORCE, IETF; STANDARD, INTERNET SOCIETY (ISOC) 4, RUE DES FALAISES CH- 1205 GENEVA, SWITZERLAND, 11 August 2018 (2018-08-11), pages 1-160, XP015126376,<br>* abstract *<br>* page 6 - page 14 *<br>* page 24 - page 77 *<br>----- | 1-15 | INV.<br>G06Q20/38<br>G06Q20/40 |
| A | URIEN PASCAL: "EMV-TLS, a secure payment protocol for NFC enabled mobiles",<br>2014 INTERNATIONAL CONFERENCE ON COLLABORATION TECHNOLOGIES AND SYSTEMS (CTS), IEEE,<br>19 May 2014 (2014-05-19), pages 203-210, XP032626471,<br>DOI: 10.1109/CTS.2014.6867565<br>ISBN: 978-1-4799-5157-4<br>[retrieved on 2014-07-29]<br>* the whole document *<br>----- | 1-15 | |
| | | | TECHNICAL FIELDS<br>SEARCHED (IPC)<br><br>G06Q<br>G07G |
| A | MADHOUN NOUR EL ET AL: "Security Enhancements in EMV Protocol for NFC Mobile Payment",<br>2016 IEEE TRUSTCOM/BIGDATASE/ISPA, IEEE,<br>23 August 2016 (2016-08-23), pages 1889-1895, XP033063550,<br>DOI: 10.1109/TRUSTCOM.2016.0289<br>* the whole document *<br>----- | 1-15 | |
| | -/-- | | |

The present search report has been drawn up for all claims

| Place of search | Date of completion of the search | Examiner |
|---|---|---|
| The Hague | 6 October 2025 | Lozza, Mario |

EPO FORM 1503 03.82 (P04C01)

Europäisches
Patentamt
European
Patent Office
Office européen
des brevets

# EUROPEAN SEARCH REPORT

**Application Number**

EP 25 19 7626

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/026784 A1 (WARD MICHAEL [GB] ET AL) 25 January 2018 (2018-01-25)<br>* abstract *<br>* paragraph [0007] - paragraph [0054] *<br>----- | 1-15 | |
| X | US 2018/083774 A1 (TAZZARI DAVIDE [IT] ET AL) 22 March 2018 (2018-03-22)<br>* abstract *<br>* paragraph [0006] - paragraph [0099] *<br>----- | 1-15 | |

**TECHNICAL FIELDS SEARCHED (IPC)**

The present search report has been drawn up for all claims

| Place of search | Date of completion of the search | Examiner |
|---|---|---|
| The Hague | 6 October 2025 | Lozza, Mario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 7626

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2025

| Patent document cited in search report | Publication date | Patent family member(s) | Publication date |
|---|---|---|---|
| US 2018026784 A1 | 25-01-2018 | AU 2017299473 A1 | 06-12-2018 |
| | | BR 112019001011 A2 | 14-05-2019 |
| | | CA 3026191 A1 | 25-01-2018 |
| | | CN 109479001 A | 15-03-2019 |
| | | EP 3273635 A1 | 24-01-2018 |
| | | JP 6701431 B2 | 27-05-2020 |
| | | JP 2019521620 A | 25-07-2019 |
| | | RU 2718229 C1 | 31-03-2020 |
| | | US 2018026784 A1 | 25-01-2018 |
| | | WO 2018017400 A1 | 25-01-2018 |
| US 2018083774 A1 | 22-03-2018 | AU 2017216464 A1 | 05-04-2018 |
| | | CN 107872450 A | 03-04-2018 |
| | | EP 3299988 A1 | 28-03-2018 |
| | | JP 2018064268 A | 19-04-2018 |
| | | US 2018083774 A1 | 22-03-2018 |